# EUROPEAN PATENT APPLICATION

(11) **EP 2 602 991 A1**
(43) Date of publication of application: **12.06.2013**
(21) Application number: 13156211.8
(22) Date of filing: 29.03.2008
(51) Int. Cl.: H04N 5/445, H04N 21/41, H04N 21/436, G06F 3/0488, H04N 21/414, H04N 21/442

(54) **Display Apparatus and Control Method Thereof**

(30) Priority: 30.10.2007 KR 20070109814
(62) Divisional of application: 08153683.1
(71) Applicant: Samsung Electronics Co., Ltd., Gyeonggi-do 443-742 (KR)
(72) Inventor: Kim, II-kwon, Gyeonggi-do (KR); Kim, Ji-eun, Gyeonggi-do (KR); Jo, Sung-baik, Gyeonggi-do (KR); Park, Ji-hyun, Seoul (KR); Kim, Joon-hwan, Gyeonggi-do (KR); Kim, Hyun-jin, Seoul (KR)
(74) Representative: Misselbrook, Paul

(57) **Abstract**

A display apparatus (100) and a control method of the display apparatus (100) are provided. The display apparatus (100) displays information regarding peripheral apparatuses (20, 30, 40) communicably connected to a broadcast receiving apparatus (10), reduces a size of one or more content items selected from displayed content items, displays the content items the size of which is reduced, and sends a request to the broadcast receiving apparatus (10) to display one of the displayed content items.

## Description

### BACKGROUND OF THE INVENTION

### 1. Field of the Invention

Apparatuses and methods consistent with the present invention relate to a display apparatus, and more particularly, to a display apparatus which provides a user with useful information and content, and a control method thereof.

### 2. Description of the Related Art

The recent development of video compression technologies and the emergence of high capacity recording media have enabled users to access a wide variety of content. Additionally, as a result of the development of communication technologies, it is now possible to perform mutual communication between apparatuses in the home.

Accordingly, it has become possible to transfer content stored in one apparatus to another apparatus, and it is also possible to output content stored in one apparatus using another apparatus.

Therefore, users may more efficiently manage content stored in apparatuses in the home and may utilize such content more appropriately, so that users can enjoy a wide variety of entertainment.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided a display apparatus and a control method thereof as set forth in the appended claims. Other features of the invention will be apparent from the dependent claims, and the description which follows.

The present invention provides a display apparatus and a control method of the display apparatus in which a user may control apparatuses in the home more efficiently and make use of content provided by the apparatuses or content stored in the apparatuses more efficiently and variously.

According to an aspect of the present invention, there is provided a control method of a display apparatus, which is communicably connected to a broadcast receiving apparatus, the control method comprising receiving information regarding peripheral apparatuses which are communicably connected to the broadcast receiving apparatus from the broadcast receiving apparatus, and displaying the received information regarding the peripheral apparatuses.

The displaying may comprise schematically displaying a mutual connection status of at least one of the broadcast receiving apparatus, peripheral apparatuses and display apparatus.

The displaying may further comprise displaying a mutual connection relationship between the apparatuses using lines as representative connections and schematically displaying the mutual connection status.

The control method may further comprise sending a request to the broadcast receiving apparatus to transmit content received by the broadcast receiving apparatus to the peripheral apparatus selected from among the peripheral apparatuses by a user.

The broadcast receiving apparatus may convert the format and resolution of the received content into a format and resolution supported by the selected peripheral apparatus, and transmit the received content, the format and resolution of which have been converted.

If the display apparatus is turned on, the receiving may be performed.

According to another aspect of the present invention, there is provided a display apparatus comprising a display, a communication interface which is communicably connected to a broadcast receiving apparatus, and a controller which receives information regarding peripheral apparatuses, which are communicably connected to the broadcast receiving apparatus, via the communication interface from the broadcast receiving apparatus, and controls the display to display the received information regarding the peripheral apparatuses.

The controller may control the display to schematically display a mutual connection status of at least one of the broadcast receiving apparatus, peripheral apparatuses and display apparatus.

The controller may control the display to display a mutual connection relationship between the apparatuses using lines as representative connections and schematically display the mutual connection.

The controller may send a request to the broadcast receiving apparatus via the communication interface to transmit content received by the broadcast receiving apparatus to the peripheral apparatus selected from among the peripheral apparatuses by a user.

The broadcast receiving apparatus may convert the format and resolution of the received content into a format and resolution supported by the selected peripheral apparatus, and transmit the received content, the format and resolution of which have been converted.

If the display apparatus is turned on, the controller may receive the information regarding the peripheral apparatuses, which are communicably connected to the broadcast receiving apparatus, via the communication interface from the broadcast receiving apparatus.

According to another aspect of the present invention, there is provided a control method of a display apparatus, which is communicably connected to a broadcast receiving apparatus, the control method comprising displaying content items stored in a peripheral apparatus, which is communicably connected to the broadcast receiving apparatus; reducing a size of one or more content items selected from among the displayed content items and displaying the selected content items, the size of which has been reduced; and sending a request to the broadcast receiving apparatus to display one of the displayed content items.

The content items, the size of which has been reduced, may be displayed on a specific area of a display included in the display apparatus.

The control method may further comprise enlarging the size of the content item re-selected from among the content items the size of which has been reduced, and displaying the re-selected content item, the size of which has been enlarged.

The control method may further comprise displaying broadcast content items; reducing a size of one or more broadcast content items from among the displayed broadcast content items and displaying the selected broadcast content items, the size of which has been reduced; and sending a request to the broadcast receiving apparatus to display the broadcast content item re-selected from among broadcast content items the size of which has been reduced.

The control method may further comprise sending a request to the peripheral apparatus to move a content item selected by a user from among the displayed content items to another peripheral apparatus.

According to another aspect of the present invention, there is provided a display apparatus comprising a display; a communication interface which is communicably connected to a broadcast receiving apparatus; and a controller which controls content items stored in a peripheral apparatus communicably connected to the broadcast receiving apparatus to be displayed on the display, which controls one or more content items selected from among the displayed content items to be reduced in size and displayed, and which sends a request to the broadcast receiving apparatus via the communication interface to display one of the displayed content items.

The controller may cause the content items, the size of which has been reduced, to be displayed on a specific area of the display.

The controller may cause a size of a content item re-selected from among the content items, the size of which has been reduced, to be enlarged and the re-selected content item, the size of which has been enlarged, to be displayed on the display.

The controller may cause broadcast content items to be displayed on the display, cause one or more broadcast content items selected from among the displayed broadcast content items to be reduced in size and displayed, and send a request to the broadcast receiving apparatus via the communication interface to display a broadcast content item re-selected from among the broadcast content items, the size of which has been reduced.

The controller may send a request to the peripheral apparatus via the communication interface to move a content item selected by a user from among the displayed content items to another peripheral apparatus.

According to another aspect of the present invention, there is provided a control method of a display apparatus, which is communicably connected to a broadcast receiving apparatus, the control method comprising searching for broadcast-related information regarding a broadcast over a connected network while the broadcast receiving apparatus currently displays the broadcast; and displaying the broadcast-related information obtained by searching.

The searching may comprise at least one of searching for additional information regarding the broadcast which is contained in a broadcast signal on the network; searching for information using keywords regarding the broadcast on the network; searching for information which is provided via the network by a broadcast provider; and searching for information which is provided via the network by a general viewer.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 is a block diagram of a system to which the present invention is applicable;
FIG. 2 is a detailed block diagram of a secondary display shown in FIG. 1;
FIGS. 3 and 4 are flowcharts explaining a control method of the secondary display, according to an exemplary embodiment of the present invention;
FIG. 5 is an example diagram showing a connection status window;
FIGS. 6A to 6C are diagrams showing a broadcast search graphical user interface (GUI);
FIGS. 7A and 7B are diagrams showing a content search GUI; and
FIGS. 8A to 8C are diagrams showing a GUI in another form.

### DETAILED DESCRIPTION OF EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in excessive detail since they would obscure the invention unnecessarily.

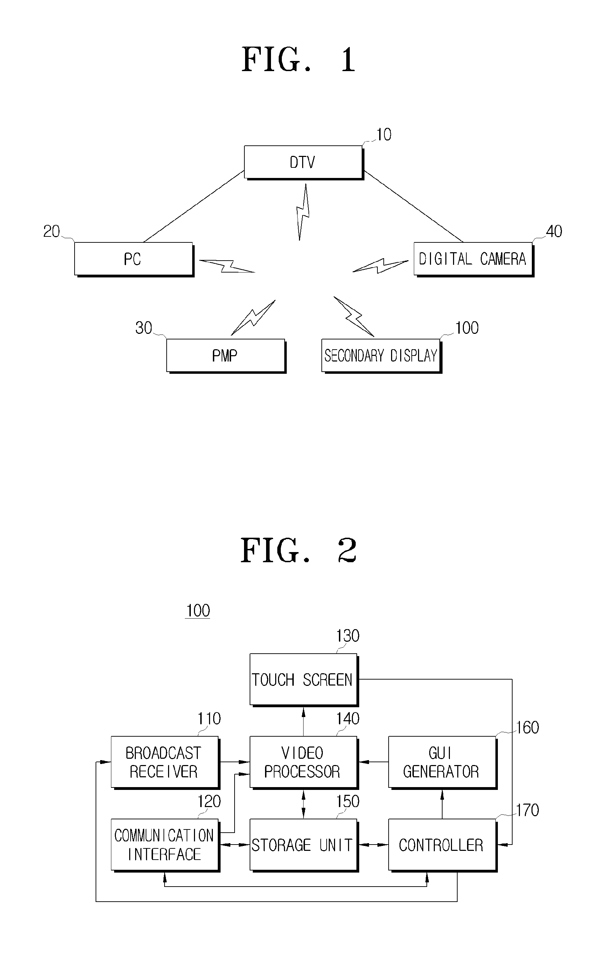

FIG. 1 is a block diagram of a system to which the present invention is applicable. The system of FIG. 1 is configured by connecting a digital television (DTV) 10, a personal computer (PC) 20, a personal multimedia player (PMP) 30, a digital camera 40 and a secondary display 100 to enable mutual communication therebetween.

The above apparatuses may be connected to each other via wire or wirelessly. As shown in FIG. 1, the apparatuses are wirelessly connected, except that the DTV 10 is connected to the PC 20 and the digital camera 40 via wire.

The secondary display 100 may be of a size suitable for a user to hold and manually operate the secondary display 100 in his or her hand, for example approximately seven inches or less, but the present invention is not limited thereto. The secondary display 100 may be connected wirelessly to the Internet.

FIG. 2 is a detailed block diagram of the secondary display 100 shown in FIG. 1. The secondary display 100 of FIG. 2 comprises a broadcast receiver 110, a communication interface 120, a touch screen 130, a video processor 140, a storage unit 150, a GUI generator 160 and a controller 170.

The broadcast receiver 110 receives a broadcast from a broadcast station and demodulates the received broadcast. The communication interface 120 enables the DTV 10 to wirelessly communicate with apparatuses (hereinafter, referred to as "peripheral apparatuses") which are disposed in the vicinity of the DTV 10. Here, the DTV 10 may be communicably connected to the PC 20, PMP 30 and digital camera 40 via the communication interface 120.

The touch screen 130 functions to display content, information and a GUI to be provided to the user, and to receive user commands input by touch.

The video processor 140 converts broadcast content received by the broadcast receiver 110, content received via the communication interface 120 from an external source or content stored in the storage unit 150 into a format suitable for display on the touch screen 130.

The GUI generator 160 generates a GUI such as a menu that may be provided for a user on the touch screen 130, and transfers the generated GUI to the video processor 140. The video processor 140 then combines the GUI received from the GUI generator 160 with content to be displayed on the touch screen 130.

The controller 170 controls the entire operation of the secondary display 100 according to the user commands input through the touch screen 130.

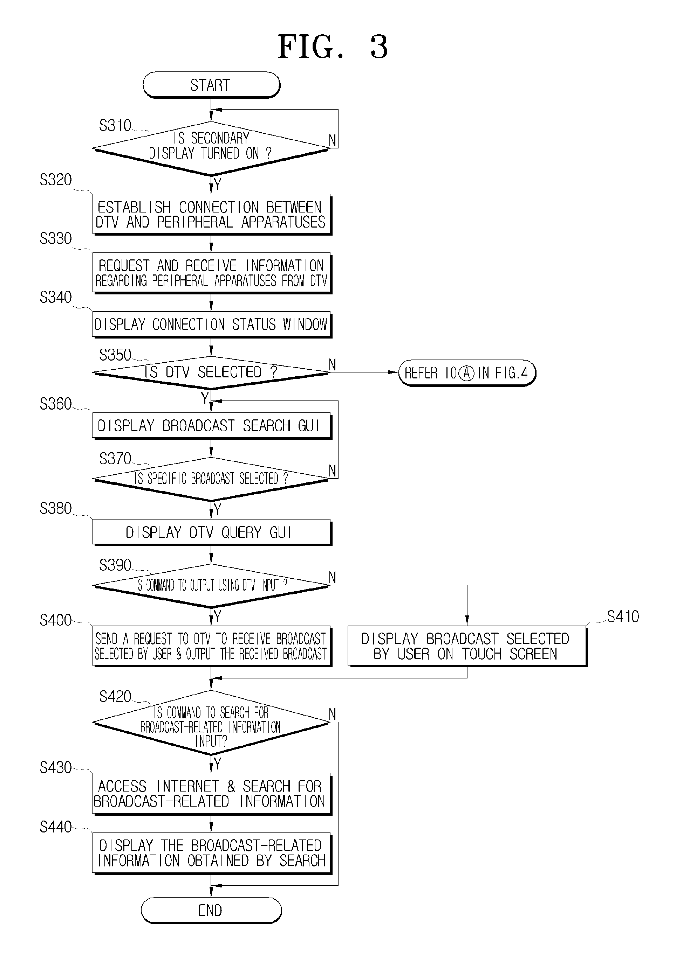

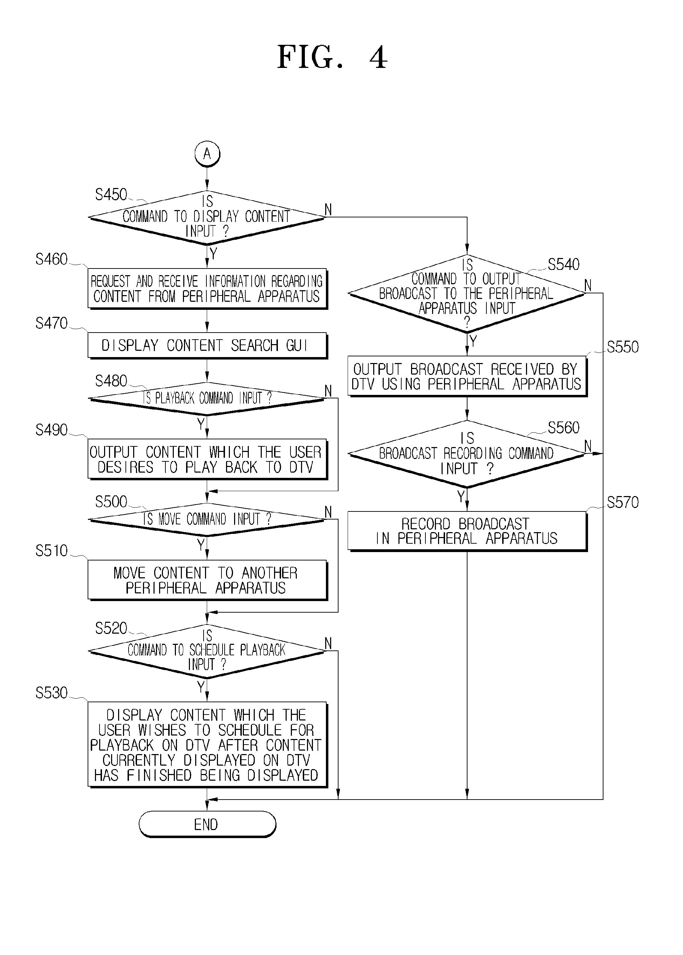

Hereinafter, a process by which the controller 170 controls the secondary display 100 will be described in detail with reference to FIGS. 3 and 4.

In FIG. 3, if the secondary display 100 is turned on (operation S310-Y), the controller 170 of the secondary display 100 may establish a connection between the DTV 10 and the peripheral apparatuses 20, 30 and 40 via the communication interface 120 (operation S320).

The controller 170 may request information regarding the peripheral apparatuses from the DTV 10 via the communication interface 120 and receive the requested information (operation S330). Here, the information regarding the peripheral apparatuses includes not only addresses, types and names of the peripheral apparatuses, but also the form of connection between the peripheral apparatuses and the DTV 10.

The controller 170 may control the GUI generator 160 to generate a connection status window based on the received information regarding the peripheral apparatuses and display the generated connection status window on the touch screen 130 (operation S340). The connection status window is displayed schematically to show the connection relationship between the DTV 10 and the peripheral apparatuses 20, 30 and 40.

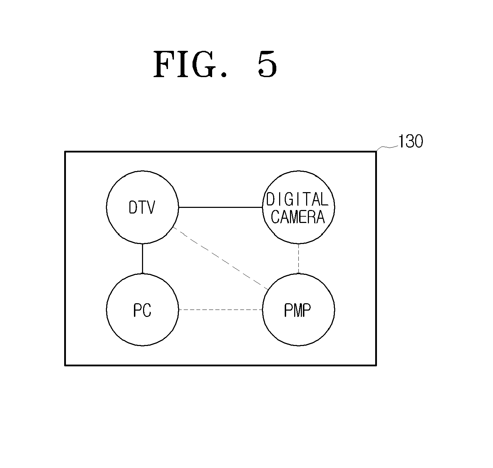

FIG. 5 shows the connection status window displayed on the touch screen 130 in operation S340. In FIG. 5, the apparatuses are connected with solid or dotted lines. A dotted line indicates a wireless connection and a solid line indicates a wired connection. The lines of FIG. 5 relate to information notifying a user whether it is possible to transmit and move content between the apparatuses.

Although the secondary display 100 is not shown in FIG. 5, the connection status window may be implemented so that the secondary display 100 may appear.

The user may touch an icon of the apparatuses, namely the DTV, PC, PMP and digital camera, appearing on the connection status window on the touch screen 130, to select a specific apparatus. If the user selects the DTV (operation S350-Y), the controller 170 may control the GUI generator 160 to display a broadcast search GUI on the touch screen 130 (operation S360).

The broadcast search GUI refers to a GUI used to search for a broadcast which a user desires to view on the DTV 10 or the secondary display 100 and to select the broadcast. The controller 170 may control the GUI generator 160 to generate a broadcast search GUI using Electronic Program Guide (EPG) information contained in a broadcast signal received by the broadcast receiver 110, or to generate a broadcast search GUI using EPG information received via the communication interface 120 from the DTV 10.

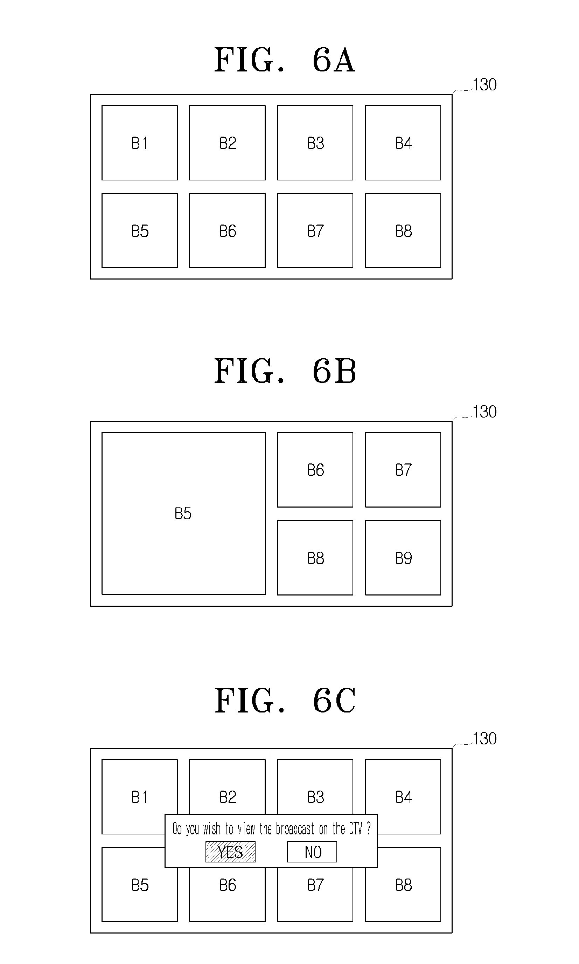

FIG. 6A shows the broadcast search GUI displayed on the touch screen 130 as a result of operation S360. The displayed broadcast search GUI is implemented so that still images B1 to B8 indicating broadcasts are shown. In this situation, detailed information regarding the broadcasts may appear along with the still images B1 to B8.

The user may input an enlarge command in order to enlarge one still image selected from among still images indicating broadcasts displayed on the broadcast search GUI. FIG. 6B shows the broadcast search GUI displayed on the touch screen 130 when still image B5 is enlarged in response to user selection.

Additionally, the user may select a desired broadcast from among the broadcasts displayed on the broadcast search GUI by touching a still image corresponding to the desired broadcast.

If the user selects a specific broadcast (operation S370-Y), the controller 170 may display a DTV query GUI so that the DTV query GUI is displayed on top of the broadcast search GUI (operation S380). FIG. 6C shows the DTV query GUI displayed on top of the broadcast search GUI displayed on the touch screen 130 after operation S380.

If the user wishes to view a broadcast on the DTV, that is, if the user touches "YES" on the DTV query GUI shown in FIG. 6C (operation S390-Y), the controller 170 may send a request to the DTV 10 via the communication interface 120 to receive the broadcast selected by the user and output the received broadcast (operation S400). Accordingly, the DTV 10 may receive the broadcast selected by the user in operation S370 and may then output the received broadcast.

When the DTV 10 is turned off, the controller 170 may also send a request via the communication interface 120 to turn on the DTV 10 in operation S400.

Alternatively, if the user does not wish to view a broadcast on the DTV, that is, if the user touches "No" on the DTV query GUI shown in FIG. 6C (operation S390-N), the controller 170 may control the broadcast receiver 110 to receive the broadcast selected by the user in operation S370 so that the broadcast selected by the user may be displayed on the touch screen 130 (operation S410).

During operation S410, the broadcast may be displayed covering the full screen of the touch screen 130. However, the full screen image may be reduced according to a user command. For example, the full scale image may be reduced to be equal in size to still images B5 or B6.

In this situation, if the user re-selects the still image indicating the broadcast, the size of which has been reduced, the broadcast corresponding to the re-selected still image may be displayed covering the full screen of the touch screen 130 again. However, it is possible to output the broadcast corresponding to the re-selected still image through the DTV 10 according to a user's settings.

If the user inputs a command to search for broadcast-related information (operation S420-Y), the controller 170 may access the Internet via the communication interface 120 and search for a variety of broadcast-related information (operation S430). Additionally, the controller 170 may control the GUI generator 160 to display the broadcast-related information obtained by the search on the touch screen 130 (operation S440).

During operation S430, the controller 170 may use additional information (metadata) contained in the broadcast signal in order to search for broadcast-related information. The broadcast-related information provided in operation S440 includes broadcast-related information which is provided from sites of broadcast stations, which is acquired by performing a search using keywords generated based on the additional information, which is provided via the Internet by a general viewer (that is, a third party), and which is acquired by performing a search using keywords input manually by the user.

In this situation, the user may determine which broadcast-related information is displayed on the touch screen 130.

Additionally, during operation S440, information associated with a broadcast currently displayed on the DTV 10 may be displayed as broadcast-related information.

The situation in which the user selects the DTV from the connection status window displayed on the touch screen 130 has been described in detail. Hereinafter, a situation in which the user selects one from among the peripheral apparatuses, namely the PC, PMP and digital camera, from icons of the connection status window displayed on the touch screen 130 in operation S350-N will be described in detail with reference to FIG. 4.

If the user inputs a command to display content stored in the selected peripheral apparatus (operation S450-Y), the controller 170 may request information regarding the content from the selected peripheral apparatus and receive the requested information (operation S460). For example, if the user selects the digital camera 40, the controller 170 may request information regarding content stored in the digital camera 40 from the digital camera 40 and receive the requested information via the communication interface 120.

The controller 170 may then control the GUI generator 160 to display a content search GUI on the touch screen 130 (operation S470).

The content search GUI is used to search for content which the user desires to play back through the DTV 10 from content stored in the peripheral apparatuses and used to select the obtained content. The controller 170 may control the GUI generator 160 to generate a content search GUI using the information regarding the content received in operation S460.

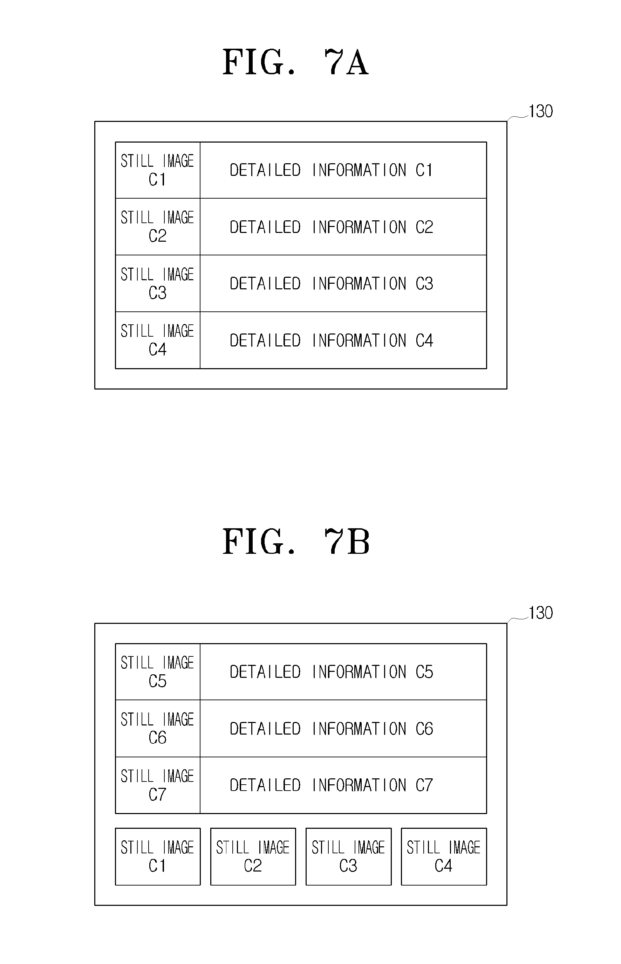

FIG. 7A shows the content search GUI displayed on the touch screen 130 as a result of operation S470. The content search GUI is implemented so that still images C1 to C4 indicating content are displayed and so that detailed information regarding the content is displayed next to the still images C1 to C4.

The user may input a reduction command in order to reduce the still images indicating content displayed on the content search GUI. FIG. 7B shows the content search GUI on which still images C1 to C4 indicating content are reduced and displayed at the bottom and other still images C5 to C7 indicating content is also displayed.

Additionally, the user can manage content using the content search GUI so that content may be played back, moved or scheduled for playback. Hereinafter, a process by which the user manages content will be described in detail.

If the user inputs a command to play back specific content (operation S480-Y), the controller 170 may cause content which the user desires to play back to be output to the DTV 10 (operation S490).

Specifically, during operation S490, the controller 170 may send a request to the peripheral apparatus (for example, the digital camera 40) via the communication interface 120 to transmit the content which the user desires to play back to the DTV 10, and may then send a request to the DTV 10 via the communication interface 120 to output the content received from the peripheral apparatus.

If the user enters a command to move specific content (operation S500-Y), the controller 170 may cause the specific content to be moved to another peripheral apparatus (operation S510).

Specifically, during operation S510, the controller 170 may send a request to the peripheral apparatus (for example, the digital camera 40) via the communication interface 120 to transmit the content which the user desires to move to the DTV 10. The controller 170 may then send a request to another peripheral apparatus (for example, the PC 20) via the communication interface 120 to receive the content from the peripheral apparatus (for example, the digital camera 40) and store the received content.

Additionally, if the user inputs a command to schedule playback of specific content (operation S520-Y), the controller 170 may cause the content which the user wishes to schedule for playback to be displayed on the DTV 10 after content currently displayed on the DTV 10 has finished being displayed (operation S530).

In more detail, in operation S530, the controller 170 may send a request to the peripheral apparatus (for example, the PMP 30) via the communication interface 120 to transmit the content which the user wishes to schedule for playback to the DTV 10. The controller 170 may then send a request to the DTV 10 via the communication interface 120 to receive the content received from the peripheral apparatus and store the received content so that the stored content may be output after the content currently displayed on the DTV 10 has finished being displayed.

Furthermore, if the user inputs a command to output a broadcast to the peripheral apparatus (operation S540-Y), the controller 170 may cause a broadcast received by the DTV 10 to be output using the peripheral apparatus selected by the user (operation S550).

During operation S550, the controller 170 may send a request to the DTV 10 via the communication interface 120 to transmit a currently received broadcast to the peripheral apparatus (for example, the PC 20) selected by the user, and may then send a request to the peripheral apparatus via the communication interface 120 to output the broadcast received from the DTV 10.

In this situation, the DTV 10 may convert the format and resolution of the currently received broadcast into a format and resolution supported by the peripheral apparatus, or the peripheral apparatuses may convert the format and resolution of the currently received broadcast.

If the user enters a broadcast recording command (operation S560-Y), the controller 170 may cause a broadcast to be recorded by the peripheral apparatus (operation S570).

Specifically, in operation S570, the controller 170 may send a request to the peripheral apparatus via the communication interface 120 to simultaneously output and store the broadcast received from the DTV 10.

The process by which the controller 170 controls the secondary display 100 has been described in detail according to an exemplary embodiment of the present invention.

Although the controller 170 acquires the information regarding the peripheral apparatuses from the DTV 10 in an exemplary embodiment of the present invention, the present invention is not limited thereto. Accordingly, the information regarding the peripheral apparatuses may be acquired from an access point (not shown) of the system shown in FIG. 1. Here, the access point may be connected to the peripheral apparatuses via wire or wirelessly.

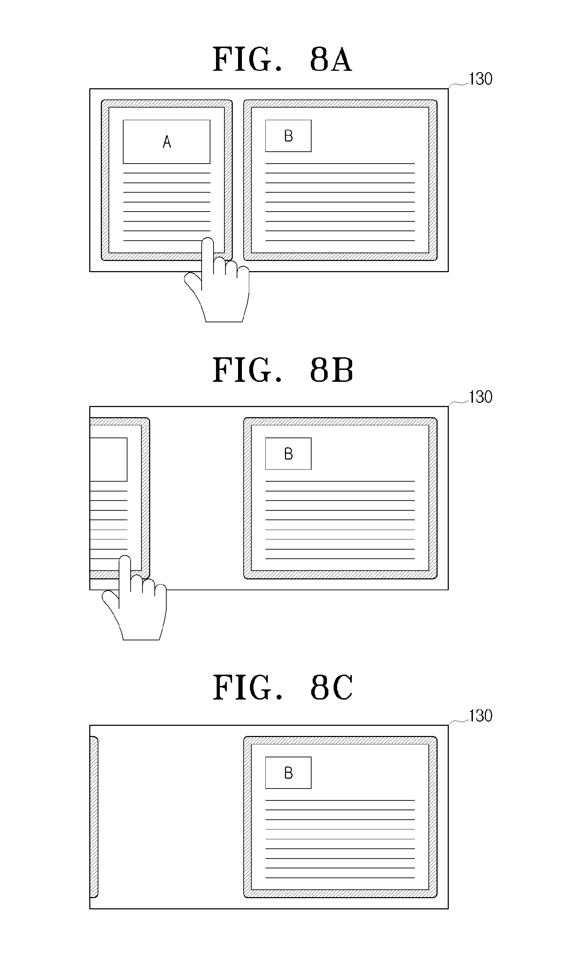

Additionally, in the above exemplary embodiments of the present invention, the forms of the broadcast search GUI and the content search GUI are merely exemplary, and accordingly the broadcast search GUI and the content search GUI may be generated in another forms. FIG. 8A shows a GUI in another form to which the present invention is applicable. The GUI of FIG. 8A shows two broadcasts (or two pieces of content), and if the user selects and slidingly moves one of the two broadcasts, the selected broadcast may be reduced in size while moving.

FIGS. 8B and 8C show a situation in which the user slidingly moves broadcast "A" to the left so that the size of broadcast "A" is reduced. In this situation, if the user slidingly moves the reduced broadcast "A" to the right, that is, in the direction opposite to the previously moving direction, broadcast "A" may be returned to its original position.

Additionally, the secondary display 100 of the exemplary embodiment of the present invention is communicably connected to the DTV 10 and the peripheral apparatuses 20, 30 and 40, so the secondary display 100 may receive commands to operate the apparatuses from the user and transfer the received commands.

In an exemplary embodiment of the present invention, the secondary display 100 may enter power save mode to reduce power consumption. For example, when the secondary display 100 determines that it is disposed on a flat surface by measuring its position angle, and when there is no user manipulation for a predetermined period of time, the secondary display 100 may enter power save mode.

Additionally, the secondary display 100 may reconstruct content displayed on the touch screen 130 according to the direction in which it is orientated. For example, if the secondary display 100 stands horizontally, the GUI shown in FIG. 6A may be displayed on the touch screen 130, and conversely, if the secondary display 100 stands vertically, the touch screen 130 may be divided into upper and lower portions so that the screen shown in FIG. 6A may be displayed on the upper portion and the detailed information and other types of information (for example, broadcast-related information) may be displayed on the lower portion.

Alternatively, if the secondary display 100 stands horizontally, the GUI shown in FIG. 7A may be displayed on the touch screen 130. Conversely, if the secondary display 100 stands vertically, the touch screen 130 may be divided into upper and lower portions so that the screen shown in FIG. 7A may be displayed on the upper portion and other types of information (for example, information on connection status) may be displayed on the lower portion.

The secondary display 100 of the exemplary embodiment of the present invention may be supported by a recharger. In this situation, the storage unit 150 or the communication interface 120 of the secondary display 100 may be housed in the recharger.

If the secondary display 100 is mounted in the recharger, the content stored in the storage unit 150 of the secondary display 100 may automatically be transmitted to the DTV 10, or content contained in a list created by the user may automatically be played back and displayed on the touch screen 130.

Additionally, if the secondary display 100 is mounted in the recharger when the DTV 10 is turned off, current broadcast images on specific channels may be displayed on the touch screen 130.

As described above, according to exemplary embodiments of the present invention, a user may control apparatuses in the home more efficiently using information provided by a display apparatus. Additionally, the user may make use of a wide variety of content provided by the apparatuses or content stored in the apparatuses more efficiently.

Although a few preferred embodiments have been shown and described, it will be appreciated by those skilled in the art that various changes and modifications might be made without departing from the scope of the invention, as defined in the appended claims.

## Claims

1. A control method of a display apparatus (100), which is communicably connected to a broadcast receiving apparatus (10), the control method comprising:
receiving from the broadcast receiving apparatus (10) information regarding peripheral apparatuses (20, 30, 40) which are communicably connected to the broadcast receiving apparatus (10); and
displaying on the display apparatus a connection status window to notify a user whether it is possible to transmit and move content between the peripheral apparatus and the display apparatus based on the received information regarding the peripheral apparatuses (20, 30, 40).

2. The control method of claim 1, wherein the displaying comprises schematically displaying a mutual connection status of at least one of the broadcast receiving apparatus (10), the peripheral apparatuses (20, 30, 40) and the display apparatus (100).

3. The control method of claim 2, wherein the displaying further comprises displaying a mutual connection relationship between the at least one of the broadcast receiving apparatus (10), the peripheral apparatuses (20, 30, 40) and the display apparatus (100), and schematically displaying the mutual connection status.

4. The control method of claim 2, further comprising:
transmitting to the broadcast receiving apparatus (10) a request to transmit content received by the broadcast receiving apparatus (10) to a selected one of the peripheral apparatuses (20, 30, 40).

5. The control method of claim 4, wherein the broadcast receiving apparatus (10) converts a format and a resolution of the received content into a format and a resolution supported by the selected one of the peripheral apparatuses (20, 30, 40), and transmits the received content, the format and the resolution of which have been converted.

6. The control method of any preceding claim, wherein the receiving is performed if the display apparatus (100) is turned on.

7. A display apparatus (100) comprising:
a display (130);
a communication interface (120) which is communicably connected to a broadcast receiving apparatus (10); and
a controller (170) which receives from the broadcast receiving apparatus (10) information regarding peripheral apparatuses (20, 30, 40), which are communicably connected to the broadcast receiving apparatus (10), via the communication interface (120), and controls the display (130) to display on the display apparatus a connection status window to notify a user whether it is possible to transmit and move content between the peripheral apparatus and the display apparatus based on the received information regarding the peripheral apparatuses (20, 30, 40).

8. The display apparatus (100) of claim 7, wherein the controller (170) controls the display (130) to schematically display a mutual connection status of at least one of the broadcast receiving apparatus (10), the peripheral apparatuses (20, 30, 40) and the display apparatus (100).

9. The display apparatus (100) of claim 8, wherein the controller (170) controls the display (130) to display a mutual connection relationship between the at least one of the broadcast receiving apparatus (10), the peripheral apparatuses (20, 30, 40) and the display apparatus (100), and to schematically display the mutual connection status.

10. The display apparatus (100) of claim 8, wherein the controller (170) transmits a request to the broadcast receiving apparatus (10) via the communication interface (120) to transmit content received by the broadcast receiving apparatus (10) to a selected one of the peripheral apparatuses (20, 30, 40).

11. The display apparatus (100) of claim 10, wherein the broadcast receiving apparatus (10) converts a format and a resolution of the received content into a format and resolution supported by the selected one of the peripheral apparatuses (20, 30, 40), and transmits the received content, the format and the resolution of which have been converted.

12. The display apparatus (100) of claim 7, wherein the controller (170) receives the information regarding the peripheral apparatuses (20, 30, 40), which are communicably connected to the broadcast receiving apparatus (10), via the communication interface (120) from the broadcast receiving apparatus (10), if the display apparatus (100) is turned on.

13. The control method of claims 1 to 6 wherein the display apparatus (100), which is communicably connected to a DTV (10), the control method comprising:
searching for broadcast-related information regarding a broadcast over a connected network, while the broadcast receiving apparatus (10) currently displays the broadcast; and
displaying the broadcast-related information obtained by the searching.

14. The control method of claim 13, wherein the searching comprises at least one of:
searching for additional information regarding the broadcast which is contained in a broadcast signal on the connected network;
searching for information using keywords regarding the broadcast on the connected network;
searching for information which is provided via the network by a broadcast provider; and
searching for information which is provided via the network by a general viewer.
